# EUROPEAN PATENT APPLICATION

(11) **EP 3 939 430 A1**
(43) Date of publication of application: **19.01.2022**
(21) Application number: 20770030.3
(22) Date of filing: 13.03.2020
(51) Int. Cl.: A01N 25/08, A01M 1/20, A01N 63/30, A01P 7/04

(54) **PEST CONTROL MATERIAL USING ENTOMOPARASITIC MICROBE AND PEST CONTROL METHOD USING SAME**

(30) Priority: 14.03.2019 JP 2019047524
(71) Applicant: Idemitsu Kosan Co.,Ltd., Tokyo 100-8321 (JP)
(72) Inventor: INAI, Koji, Tsukuba-shi, Ibaraki 300-2646 (JP); KONDO, Akihiro, Tsukuba-shi, Ibaraki 300-2646 (JP)
(74) Representative: Vossius & Partner Patentanwälte Rechtsanwälte mbB
(86) International application number: PCT/JP2020/011246
(87) International publication number: WO 2020/184719

(57) **Abstract**

Aiming at improving long-term storage stability and the insect pest control effect of an insect pest control material utilizing a filamentous fungus, the present invention provides an insect pest control material including an entomogenous filamentous fungus grown on a solid support, wherein the spore fungal count of the entomogenous filamentous fungus in a surface layer is 1.0×10⁶ to 1.0×10¹⁰ cells/cm².

## Description

### TECHNICAL FIELD

The present invention relates to an insect pest control material using an entomogenous fungus, especially to an insect pest control material for insect pests belonging to the family Cerambycidae of the order Coleoptera, using a fungus belonging to the genus *Beauveria.* More specifically, the present invention relates to an insect pest control material comprising an entomogenous fungus or a culture product thereof supported on a solid support, and a pest control method using it.

### BACKGROUND ART

Insect pests such as longhorn beetles are harmful to crops and trees, and the damage caused by the insect pests has been a problem in the fields of agriculture and forestry. In order to control insect pests such as longhorn beetles, microbial pesticides such as filamentous fungi that parasitize these insects to produce insecticidal effects have been used.

For example, JP H7-108212 B (Patent Document 1) and JP H8-22810 B (Patent Document 2) disclose growing a filamentous fungus on a non-woven fabric, and use of the resulting non-woven fabric as an insect pest control material. For such a material using a solid support such as a non-woven fabric, the effect has been defined based on the viable fungal count, mainly the number of spores (conidia), in a culture or formulation.

JP 3764254 B (Patent Document 3) discloses an insecticide using a solid support, wherein the viable fungal count (the number of conidia or the number of spores) in the support is increased by, for example, using a bilayer culture support in order to promote contact infection of insect pests and to allow continuation of the effect. As the document describes that about 3×10⁸ spores are required in terms of the optimum number of spores per unit area, an extremely large number of fungal cells have been required. However, there is a problem that, in order to obtain at least the required number of spores by culture, a high cost is required because of the labor cost, the air-conditioning cost, the culture period, and the like. Moreover, it has been known that an increase in the total fungal count in the support does not significantly contribute to the stability of the effect and the storage stability (persistence) of the agent, and that the effect decreases within a half to one year even by application of a conventional technique, or within several weeks to several months after use.

### PRIOR ART DOCUMENTS

### [Patent Documents]

[Patent Document 1] JP H7-108212 B
[Patent Document 2] JP H8-22810 B
[Patent Document 3] JP 3764254 B

### SUMMARY OF THE INVENTION

### PROBLEMS TO BE SOLVED BY THE INVENTION

Conventionally, the effects of microbial pesticides using filamentous fungi have been defined based on the total fungal count, mainly the total number of spores (conidia), in a culture or formulation. For securing the storage stability and the stability of the effect of the culture or formulation, an extremely large number of spores are included therein. Since this results in an increased production cost of the product itself, microbial pesticides are more expensive than chemical pesticides in many cases. Thus, the microbial pesticides do not necessarily meet the demand of the producers.

In view of this, an object of the present invention is an improvement of the long-term storage stability and an improvement of the insect pest control effect of an insect pest control material.

### MEANS FOR SOLVING THE PROBLEMS

In order to solve the above problem, the present inventors intensively studied and found that an important index for determination of the storage stability and the insect pest control effect is the number of transferable conidia, that is, the number of spore fungi located in the surface layer (hereinafter referred to as the surface-layer spore fungal count) among the spores present on the support surface, or the number of dispersible conidia, rather than the total fungal count or the total spore fungal count of the fungal cells cultured on a support as in the conventional technique.

The present invention was completed based on such findings.

More specifically, the present invention provides the followings.
[1] An insect pest control material comprising an entomogenous filamentous fungus grown on a solid support, wherein the spore fungal count of the entomogenous filamentous fungus in a surface layer is 1.0×10⁶ to 1.0×10¹⁰ cells/cm².
[2] The insect pest control material according to [1], wherein the entomogenous filamentous fungus is a fungus belonging to the genus *Beauveria,* a fungus belonging to the genus *Paecilomyces,* a fungus belonging to the genus *Trichoderma,* a fungus belonging to the genus *Verticillium,* or a fungus belonging to the genus *Lecanicillium.*
[3] The insect pest control material according to [1] or [2], wherein the entomogenous filamentous fungus is *Beauveria bassiana* or *Beauveria brongniartii.*
[4] The insect pest control material according to any one of [1] to [3], wherein the entomogenous filamentous fungus is the *Beauveria bassiana* F-263 (NITE BP-02855) strain or the *Beauveria brongniartii* NBL-851(NITE BP-02854) strain.
[5] The insect pest control material according to any one of [1] to [4], wherein the insect pest is a plant insect pest or a hygiene insect pest.
[6] The insect pest control material according to [5], wherein the plant insect pest is an insect pest of a tree.
[7] The insect pest control material according to [6], wherein the insect pest of a tree is an insect pest belonging to the family Rhynchophoridae, the family Curculionidae, or the family Cerambycidae of the order Coleoptera; or the family Delphacidae, the family Pentatomidae, the family Miridae, or the family Aphididae of the order Hemiptera.
[8] The insect pest control material according to any one of [1] to [7], wherein the solid support is an organic support.
[9] The insect pest control material according to [8], wherein the organic support is husk, sawdust, bran, wheat, rice straw, soybean, soybean meal, or plant residue.
[10] The insect pest control material according to any one of [1] to [7], wherein the solid support is an inorganic support.
[11] The insect pest control material according to [10], wherein the inorganic support is a porous support, and the porous portion comprises a medium component.
[12] The insect pest control material according to [10] or [11], wherein the inorganic support is a band-like non-woven fabric.

### EFFECT OF THE INVENTION

According to the present invention, an insect pest control material having an improved long-term storage stability and an improved insect pest control effect can be provided.

### MODE FOR CARRYING OUT THE INVENTION

The present invention provides an insect pest control material comprising an entomogenous filamentous fungus grown on a solid support, wherein the spore fungal count of the entomogenous filamentous fungus in a surface layer is within a predetermined range.

The filamentous fungus used is not limited as long as it is a filamentous fungus which parasitizes an insect to produce an insecticidal effect, and which can be cultured on a solid medium. Examples of the filamentous fungus include filamentous fungi belonging to one or more selected from the group consisting of the fungi belonging to the genus *Beauveria,* the fungi belonging to the genus *Paecilomyces,* the fungi belonging to the genus *Trichoderma,* the fungi belonging to the genus *Verticillium,* and the fungi belonging to the genus *Lecanicillium.* More specific examples of the filamentous fungus include one or more filamentous fungi selected from the group consisting of *Beauveria bassiana, Beauveria brongniartii,* and *Beauveria amrpha* from the viewpoint of the specific insecticidal potency on insect pests belonging to the family Cerambycidae of the order Coleoptera. Especially preferred examples of the filamentous fungus include the *Beauveria bassiana* F-263 strain and the *Beauveria brongniartii* NBL-851 strain. These filamentous fungi may be used individually, or two or more thereof may be used in combination. The F-263 strain has been deposited with Patent Microorganisms Depositary, NITE National Institute of Technology and Evaluation (2-5-8 Kazusakamatari, Kisarazu-shi, Chiba, Japan) under the accession No. NITE BP-02855 as of December 27, 2018 for the international deposition in accordance with the Budapest Treaty. The NBL-851 strain has been deposited with Patent Microorganisms Depositary, NITE National Institute of Technology and Evaluation (2-5-8 Kazusakamatari, Kisarazu-shi, Chiba, Japan) under the accession No. NITE BP-02854 as of December 27, 2018 for the international deposition in accordance with the Budapest Treaty.

In the material of the present invention, the spore fungal count of the entomogenous filamentous fungus in the surface layer of the support (surface-layer spore fungal count) is 1.0×10⁶ to 1.0×10¹⁰ cells/cm², preferably 1.0×10⁶ to 1.0×10⁹ cells/cm², more preferably 1.0×10⁷ to 1.0×10⁸ cells/cm².

In cases where the surface-layer spore fungal count is within this range, the storage stability of the material can be improved, and the insecticidal effect can also be improved.

As a measurement method for the surface-layer spore fungal count, for example, the following method may be used. An entomogenous filamentous fungus is cultured on a solid support. In the state where the entomogenous filamentous fungus is kept on the solid support, the solid support is placed on a plate medium such that the culture surface of the solid support is in contact with the plate medium. A load is applied for a certain length of time from the top to an extent at which the solid support is not broken, and then the solid support is removed. The surface of the plate medium is washed out with sterile water or with sterile water containing a small amount of surfactant. The whole amount of the wash liquid is collected, and subjected to measurement of the spore fungal count under the microscope. In this case, the surface-layer spore fungal count is calculated based on the surface area of the solid support. More specifically, after measuring the spore fungal count for part of the surface layer, the spore fungal count for the entire surface can be calculated based on the ratio of the area in the entire surface.

The solid support may be either an organic support or an inorganic support.

Specific examples of the organic support include husk, sawdust, bran, wheat, rice straw, soybean, soybean meal, and plant residue. However, the organic support is not limited to these as long as the support contains a component which can be metabolized by the filamentous fungus, or as long as the support is capable of absorbing a medium required for culture of the entomogenous fungus of interest, or capable of retaining the medium on the surface.

Specific examples of the inorganic support include porous supports having a granular, spherical, or band-like shape wherein the porous portion comprises a medium component. However, the inorganic support is not limited to these as long as the support is a porous substance capable of absorbing a medium required for culture of the entomogenous fungus of interest, or capable of retaining the medium on the surface. As the inorganic support, a mineral, a foam matrix, a non-woven fabric, or a woven fabric may be preferably used. As the inorganic support, a band-shaped non-woven fabric may be more preferably used.

The mineral is not limited, and a natural mineral such as kaolin, clay, talc, chalk, quartz, attapulgite, montmorillonite, or diatomaceous earth; or a synthetic mineral such as silicic acid, alumina, or silicate; may be used.

Examples of the foam matrix include the polyurethane foam, polystyrene foam, vinyl chloride foam, polyethylene foam, polystyrene form, and the like disclosed in JP S63-74479 A and JP S63-190807 A. In cases where such a foam matrix is used as a base material, the foam matrix may be used as it is, or a substance obtained by foaming a medium component with a foam composition capable of producing a foam may be used.

The material of the non-woven fabric or the woven fabric is not limited, and a commercially available material may be used. From the viewpoint of the ability to retain the medium component, water-holding capacity, and hydrophilicity; adhesion of the entomogenous filamentous fungus; utilization as a carbon source; natural disintegration properties; and the like; the material is especially preferably pulp, rayon, polyester, or the like.

The shape of the solid support is preferably a granular, spherical, band-like, or sheet-like shape from the viewpoint of simply and securely placing the solid support on bait wood and maintaining the effectiveness for a long period, and from the viewpoint of efficiently infecting an insect pest belonging to the family Cerambycidae of the order Coleoptera with an entomogenous filamentous fungus by placement of even a small number of solid supports. The shape is more preferably a band-like shape.

Examples of a band-like or sheet-like culture substrate include the foam matrices disclosed in JP S63-74479 A and JP S63-190807 A, porous materials having large apparent surface areas such as non-woven fabrics and woven fabrics, and materials prepared by combination of these.

The components of the medium to be contained in the solid support are not limited as long as the medium contains a sugar source as an organic matter and nutrients required for microbial culture. Specific examples of components preferably contained in the medium include assimilable carbon sources and nitrogen sources, inorganic salts, and natural organic matters. Examples of the carbon sources include glucose, saccharose, lactose, maltose, glycerin, starch, and cellulose molasses. Examples of the nitrogen sources include ammonium sulfate, ammonium chloride, and ammonium nitrate. Examples of the inorganic salts include phosphoric acid salts such as potassium dihydrogen phosphate; magnesium nitrate; magnesium; potassium; and calcium. Examples of the natural organic matters include animal tissue extracts and animal tissue pulverization products, such as meat extract, fish meat extract, and pupal powder; plant tissue extracts such as malt extract, corn steep liquor, and soybean oil; and microbial cells and their extracts, such as dry yeast, yeast extract, and polypeptone.

Specific examples of the medium include media prepared by adding a sugar such as glucose to an extract from a cereal, more specifically, media prepared by adding a sugar such as glucose to an extract from potato.

Examples of the method of including the medium in the solid support include a method in which the medium is directly applied, and a method in which the medium is included by soaking or the like.

The culture conditions for the entomogenous filamentous fungus are not limited as long as the conditions allow the growth of the entomogenous filamentous fungus of interest. The temperature for allowing the growth of the entomogenous filamentous fungus of interest is preferably 15°C to 35°C, more preferably 20°C to 30°C. The humidity for allowing the growth of the entomogenous filamentous fungus of interest may be any of 0% to 100%. In order to achieve a surface-layer spore fungal count within the target range, it is preferred to use different humidities between the early stage of the culture and the late stage of the culture, more specifically, to use a lower humidity in the late stage of the culture than in the early stage of the culture. For example, in the early stage of the culture (for example, from the beginning of the culture, to day 3 to 8), the culture is preferably carried out at a humidity of 60% to 100%, more preferably carried out at a humidity of 80% to 100%. Thereafter (in the late stage of the culture), the culture is preferably carried out at a decreased humidity of not less than 30% and less than 80% for 2 to 5 days.

The culture of the entomogenous filamentous fungus can be obtained by, for example, a method in which the medium components are included in a culture substrate followed by inoculating and culturing the fungus, or a method in which the entomogenous filamentous fungus is precultured in advance to obtain a culture liquid, followed by mixing the culture liquid with the medium components and including the resulting mixture in a solid support.

Examples of the insect pest to be controlled include plant insect pests and hygiene insect pests. The plant insect pests are preferably insect pests of trees. Examples of the insect pests of trees include insect pests belonging to the order Coleoptera, the order Hemiptera, or the like. Examples of the insect pests belonging to the order Coleoptera include insect pests belonging to the family Rhynchophoridae, the family Curculionidae, or the family Cerambycidae. Examples of the insect pests belonging to the order Hemiptera include insect pests belonging to the family Delphacidae, the family Pentatomidae, the family Miridae, or the family Aphididae. The hygiene insect pests mean, for example, insects that cause damages such as diseases to animals including humans and domestic animals.

Examples of the insect pests belonging to the family Cerambycidae of the order Coleoptera in the present invention include *Monochamus alternatus; Anoplophora malasiaca; Psacothea hilaris; Acalolepta luxuriosa; Moechotypa diphysis; Aromia bungii;* and *Xylotrechus chinensis, Xylotrechus quadripes,* or *Xylotrechus pyrrhoderus.*

The culture of the entomogenous filamentous fungus may be, but does not necessarily need to be, applied to bait wood by, for example, winding the culture on the bait wood using a pulp non-woven fabric, or fixation by stapling. For the further improvement of the control effect, the application is more preferably carried out for gathered bait wood of the insect pest to be controlled.

The timing of the application is not limited. From the viewpoint of enhancing the control efficiency, the culture is preferably applied taking into account the life cycle of the insect pest belonging to the family Cerambycidae of the order Coleoptera to be controlled. In general, insect pests belonging to the family Cerambycidae of the order Coleoptera have the following life cycle. Eggs are laid under the bark of a tree, and the hatched larvae grow while damaging the part under the bark. When the temperature increases in spring, the larvae, which have passed the winter in pupal chambers, become pupae, and adults emerge therefrom and leave the tree, followed by maturation feeding for a certain period before mating and egg laying. For example, *Moechotypa diphysis* and the like show the emergence in August to October, and pass the winter by hiding, for example, under relatively dry stones or fallen leaves in sunny places where they can avoid rainwater, between branches and leaves of logs in bed log laying yards, under tree stumps, or under roofing tiles or walls. Thereafter, the maturation feeding period continues until May in the next year. Egg laying then begins in the May, and continues until the following August.

Thus, by carrying out the control method of the present invention during, for example, the period from August to May in the next year, adults gathering for the purpose of maturation feeding and egg laying can be controlled very efficiently, and moreover, adults immediately after the emergence can be controlled.

### EXAMPLES

The present invention is described below in more detail by way of Examples. However, the scope of the present invention is not limited to Examples.

### <Example 1> Method of Culturing Entomogenous Filamentous Fungus

Glucose was added to 4% pupal powder-extracted liquid to a final concentration of 2%, and the *Beauveria brongniartii* NBL-851 strain was subjected to shake culture in the medium for 5 days at 25°C to provide a preculture liquid. A sterile pulp non-woven fabric containing 4% pupal powder-extracted liquid and 10% glucose solution was placed on a stainless-steel net, and the preculture liquid was included in the non-woven fabric. Culture was then begun at 25°C at a humidity of 80 to 100%. Four days later, the humidity was changed to not more than 80% (not less than 30%) while the temperature was kept at 25°C, and these culture conditions were maintained to perform culture. During the culture, the surface-layer spore fungal count was measured every day using the later-described method of measuring the surface-layer spore fungal count. The culture was carried out until the surface-layer spore fungal count became not less than 5×10⁵ cells/cm². In practice, the culture was carried out for 3 days after the change in the humidity. Thereafter, excessive water was evaporated by blow drying for one day. Subsequently, the surface-layer spore fungal count was measured to confirm that the surface-layer spore fungal count was not less than 5×10⁵ cells/cm². The total spore fungal count was 1×10⁸ to 3×10⁸ cells/cm² or more at that time.

To provide a control, as described in the conventional technique JP 3764254 B, a pulp non-woven fabric containing a pupal powder-extracted liquid and the like was placed in a polypropylene bag, and culture was performed at 25°C (humidity, 100%) for 1 week. As a result, the total spore fungal count was 1×10⁸ to 3×10⁸ cells/cm² or more, but the surface-layer spore fungal count was not more than 1×10⁵ cells/cm².

In the measurement of the surface-layer spore fungal count, the non-woven fabric after the culture of the entomogenous filamentous fungus was cut into a size of 5 cm × 5 cm, and placed on PDA (Potato Dextrose Agar) medium. After application of a predetermined load thereto for 5 minutes, the non-woven fabric was removed, and all spores present on the medium surface were collected using a solution supplemented with 0.05% tween 20, followed by calculating the spore fungal count using a Thoma counting chamber under the microscope. Based on the surface area of the non-woven fabric, the surface-layer spore fungal count was calculated.

### <Example 2> Insecticidal Activity on Psacothea hilaris

A pupa of *Psacothea hilaris* at about 1 month old was used. In a large-sized container, a test sample (Example 1) which is a control material containing the *Beauveria brongniartii* NBL-851 strain was placed, and the *Psacothea hilaris* beetle was allowed to step on the control material. After confirming that the *Psacothea hilaris* beetle was in contact with the control material, it was left to stand for 1 minute. Thereafter, the *Psacothea hilaris* beetle was transferred into a large-sized container containing mulberry wood (about 1-cm diameter, two pieces), and the number of days before the complete death was counted. The effect was compared based on the insecticidal activity until day 7. In a Comparative Example, the method described in the conventional technique JP 3764254 B was used to provide a control material containing the *Beauveria brongniartii* NBL-851 strain (Comparative Example 1).

As shown in Table 1, the sample described in Comparative Example 1 and the sample described in Example 1 showed similar total fungal counts. However, the surface-layer spore fungal count was less than 1×10⁶ cells/cm² in Comparative Example 1, and not less than 1×10⁶ cells/cm² in Example 1. As a result, in Example 1, an insecticidal effect during the 7 days was found in all of the replicating experiments (replicates 1 to 4). In contrast, in Comparative Example 1, no insecticidal effect during the 7 days was found in any of the replicating experiments (replicates 1 to 4). Thus, it was found that the control material according to the present invention has improved insecticidal effect compared to that of the control material according to the conventional technique.

**[Table 1]**

| | Comparative Example 1 | | | | Example 1 | | | |
|---|---|---|---|---|---|---|---|---|
| | Replicate 1 | Replicate 2 | Replicate 3 | Replicate 4 | Replicate 1 | Replicate 2 | Replicate 3 | Replicate 4 |
| Total fungal count (cells/cm²) | 1.8 × 10⁸ | 2.1 × 10⁸ | 1.5 × 10⁸ | 6.2 × 10⁷ | 2.1 × 10⁸ | 1.0 × 10⁸ | 2.3 × 10⁸ | 7.0 × 10⁷ |
| Surface-layer spore count (cells/cm²) | 2.0 × 10⁵ | 8.0 × 10⁴ | 7.0 × 10⁵ | 4.0 × 10⁵ | 9.2 × 10⁶ | 1.5 × 10⁷ | 1.2 × 10⁶ | 2.7 × 10⁷ |
| Insecticidal effect during 7 days | not found | not found | not found | not found | found | found | found | found |

## Claims

1. An insect pest control material comprising an entomogenous filamentous fungus grown on a solid support, wherein the spore fungal count of the entomogenous filamentous fungus in a surface layer is 1.0×10⁶ to 1.0×10¹⁰ cells/cm².

2. The insect pest control material according to claim 1, wherein the entomogenous filamentous fungus is a fungus belonging to the genus *Beauveria,* a fungus belonging to the genus *Paecilomyces,* a fungus belonging to the genus *Trichoderma,* a fungus belonging to the genus *Verticillium,* or a fungus belonging to the genus *Lecanicillium.*

3. The insect pest control material according to claim 1 or 2, wherein the entomogenous filamentous fungus is *Beauveria bassiana* and/or *Beauveria brongniartii.*

4. The insect pest control material according to any one of claims 1 to 3, wherein the entomogenous filamentous fungus is the *Beauveria bassiana* F-263 (NITE BP-02855) strain and/or the *Beauveria brongniartii* NBL-851(NITE BP-02854) strain.

5. The insect pest control material according to any one of claims 1 to 4, wherein the insect pest is a plant insect pest or a hygiene insect pest.

6. The insect pest control material according to claim 5, wherein the plant insect pest is an insect pest of a tree.

7. The insect pest control material according to claim 6, wherein the insect pest of a tree is an insect pest belonging to the family Cerambycidae of the order Coleoptera.

8. The insect pest control material according to any one of claims 1 to 7, wherein the solid support is an organic support.

9. The insect pest control material according to claim 8, wherein the organic support is husk, sawdust, bran, wheat, rice straw, soybean, soybean meal, or plant residue.

10. The insect pest control material according to any one of claims 1 to 7, wherein the solid support is an inorganic support.

11. The insect pest control material according to claim 10, wherein the inorganic support is a porous support, and the porous portion comprises a medium component.

12. The insect pest control material according to claim 10 or 11, wherein the inorganic support is a band-like non-woven fabric.
